# FASCICULE DE BREVET EUROPEEN

(11) **EP 2 190 284 B1**
(45) Date de publication et mention de la délivrance du brevet: **10.04.2013**
(21) Numéro de dépôt: 07823804.5
(22) Date de dépôt: 11.09.2007
(51) Int. Cl.: A01K 7/00

(54) **Abreuvoir**
Tränke
Drinker

(43) Date de publication de la demande: 02.06.2010
(73) Titulaire: La Buvette, Société par Actions Simplifiée, 08090 Tournes (FR)
(72) Inventeur: MARTIN, Jean, F-08000 Charleville-Mezieres (FR)
(74) Mandataire: Rhein, Alain
(86) Numéro de dépôt international: PCT/FR2007/051908
(87) Numéro de publication internationale: WO 2009/034239

(56) Documents cités:
- WO-A-00/38504
- FR-A- 2 369 793
- FR-A- 2 683 703
- US-A- 2 943 601

## Description

L'invention concerne un abreuvoir pour troupeaux d'animaux.

L'invention entre dans le domaine des dispositifs pour l'abreuvement de troupeaux d'animaux.

Les abreuvoirs actuellement connus et utilisés sont de dimensions définies et fixes, permettant de contenir ainsi un certain volume maximal de liquide, généralement mais non nécessairement de l'eau, et sont donc adaptés par leur volume et dimensions à un nombre déterminé d'animaux en mesure de s'abreuver simultanément.

Pour de grands troupeaux, plusieurs de ces abreuvoirs sont installés pour résoudre le problème de fourniture en eau d'un grand nombre d'animaux. Toutefois cela ne conduit pas moins à un certain nombre de contraintes.

Ainsi, en multipliant les points d'alimentation en eau, on multiplie également le nombre d'installations de tuyauteries et de robinetterie à monter, ainsi que les risques de fuites et les problèmes de maintenance associés.

Il est un objectif de l'invention que de proposer un abreuvoir pouvant s'adapter aux variations de taille d'un troupeau, notamment dans le cas de son accroissement, tout en préservant l'accessibilité à l'abreuvement pour l'ensemble du troupeau et en minimisant le nombre de points d'alimentation en eau nécessaires.

Par ailleurs, le montage de plusieurs abreuvoirs distincts, y compris leurs raccordements par tuyauterie et robinetterie, entraîne un temps de montage au moins équivalent à la somme des temps de montage pour chacun des abreuvoirs.

Il est un autre objectif de l'invention que d'aboutir à une solution permettant un montage rapide d'un abreuvoir adaptable aux variations de taille d'un troupeau.

Pour s'adapter au mieux aux variations des besoins en eau immédiatement disponible en fonction de taille du troupeau, il est également impératif de pouvoir faire varier le débit en eau.

Par conséquent, la présente invention a également pour objectif de permettre facilement l'augmentation ou la diminution du débit en eau pour un abreuvoir adaptable aux variations de taille d'un troupeau.

Le document FR-A-2683703 décrit un abrevoir transportable comportant un ou deux bacs demi-circulaires pourvu(s) d'une face plane pouvant être raccordée à la face plane d'un bac adjacent pour former un abrevoir circulaire.

C'est ainsi dans le cadre d'une démarche inventive que l'on a imaginé un abreuvoir suivant la revendication 1 autorisant, par modularité, un agencement et un dimensionnement variable des points d'eaux offerts aux troupeaux, ceci très aisément.

De manière avantageuse, la cuve d'un tel abreuvoir comporte un fond incliné vers des moyens de vidange, notamment une ouverture apte à être obturée, pratiquée dans ledit fond.

Selon une autre caractéristique de l'invention, la cuve comporte au moins une console support réceptionnant au moins un robinet d'alimentation en eau.

Avantageusement, la console support est montée au niveau d'une paroi d'extrémité latérale de la cuve.

Selon une autre caractéristique, la console support comporte des moyens de réception et fixation de plus d'un robinet d'alimentation en eau.

Avantageusement, la cuve est conçue apte à recevoir à au moins une paroi d'extrémité latérale un capot de protection de moyens d'alimentation en eau du ou des robinets.

Par ailleurs, le capot de protection est avantageusement monté sur la paroi d'extrémité latérale de la cuve équipée d'une console support.

Selon une autre particularité de l'invention, le capot de protection comprend des moyens de raccordements intermédiaires conçus aptes à coopérer, via des moyens de liaison, d'une part, avec des moyens de raccordement de la cuve sur laquelle est monté ledit capot, et, d'autre part, avec des moyens de raccordement d'une cuve d'un abreuvoir adjacent ou des moyens de raccordement intermédiaires d'un capot de protection équipant cet abreuvoir adjacent.

Avantageusement, le capot de protection définit un logement par rapport à la cuve, pour la réception des moyens d'alimentation en eau du ou des robinets, ledit logement étant encore conçu apte à recevoir un dispositif de chauffage de type thermoplongeur ou autre.

L'abreuvoir selon l'invention peut également comporter des moyens de chauffage, notamment montés dans ou sous le fond de la cuve, par exemple des résistances électriques ou un serpentin de fluide calorifique raccordé à un dispositif de chauffage adapté.

Par ailleurs, le ou les robinets peuvent être de type grand débit et/ou débit standard et/ou basse pression.

On notera ainsi que, si l'invention permet d'augmenter en espace l'accessibilité à de l'eau à partir d'un seul point d'arrivée d'eau, elle préserve également, et avantageusement, la possibilité de multiples raccordements à de multiples points d'arrivée d'eau. Cette possibilité est notamment pertinente pour garantir certain débit d'eau lors de l'abreuvement d'un plus grand nombre d'animaux.

Par ailleurs l'invention permet aisément le contrôle de la quantité d'eau offerte à l'abreuvement par régulation du débit d'eau autorisé, et intègre des moyens de lutte contre le gel de la robinetterie ainsi que des moyens de mise à température de l'eau proposée à l'abreuvement.

D'autres buts et avantages de la présente invention apparaîtront à la description qui va suivre, exposée en se référant aux dessins ci-joints, dans lesquels :
- la figure 1 est une représentation schématisée éclatée et en perspective d'un abreuvoir selon l'invention ;
- la figure 2 est une représentation schématisée et en coupe longitudinale d'un abreuvoir similaire à celui présenté en figure 1, mais assemblé ;
- la figure 3 est une représentation schématisée de la coopération entre les moyens de raccordements de deux cuves de deux abreuvoirs adjacents ;
- la figure 4 est une représentation schématisée et en coupe de la coopération entre les moyens de raccordements d'une cuve d'un abreuvoir selon l'invention, les moyens de raccordement intermédiaire d'un capot de protection équipant ladite cuve et les moyens de raccordement d'une deuxième cuve d'un abreuvoir adjacent ;
- la figure 5 est une représentation schématisée des types d'assemblages modulaires pouvant être conçus à partir d'abreuvoirs selon l'invention.

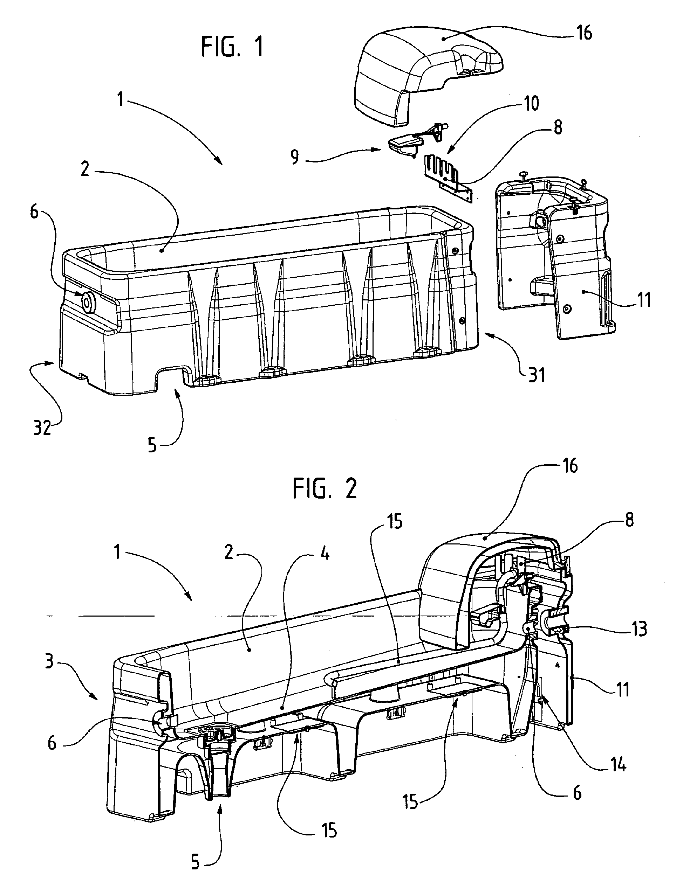

Tel que visible sur les figures 1 et 2, la présente invention concerne le domaine des dispositifs pour l'abreuvement des troupeaux d'animaux, et a trait, plus particulièrement, à un abreuvoir 1 du type comportant une cuve 2 ayant deux parois d'extrémité latérale opposées, 31, 32. Cette cuve 2 comporte encore un fond 4 avantageusement incliné vers des moyens de vidange 5, notamment une ouverture conçue apte à être obturée, pratiquée dans ledit fond 4.

A ce propos, il importe que le fond 4 de la cuve ou bac 2 soit incliné, préférentiellement de toutes parts, vers les moyens de vidange 5 afin de faciliter l'écoulement de l'eau et ladite vidange.

Selon l'invention, la cuve 2 comprend encore des moyens de raccordement 6 disposés sur chacune des parois d'extrémité latérale 3, lesdits moyens de raccordement 6 étant conçus aptes à coopérer, via des moyens de liaison 7, avec des moyens de raccordement 6 d'une cuve 2 d'un abreuvoir 1 adjacent de manière à mettre en communication les deux cuves 2 ainsi raccordées et permettre à l'eau alimentée dans l'une d'elles de se déverser dans l'autre. Préférentiellement, ce déversement intervient par débordement, c'est-à-dire lorsque l'eau dans la première cuve atteint un niveau minimum déterminé. Toutefois, la présente invention n'est nullement limitée à un tel mode de réalisation et l'on peut imaginer que les dits moyens de raccordement 6 soient de type vases communicants.

La cuve 2 illustrée en figures 1 et 2 comporte au moins une console support 8 réceptionnant un robinet d'alimentation en eau 9. Avantageusement, la console support est par ailleurs apte, grâce à des moyens de réception et fixation 10, à réceptionner plusieurs robinets d'alimentation en eau 9.

Cette variante est d'ailleurs l'objet d'un autre mode de réalisation non illustré de l'invention, l'abreuvoir comprenant ainsi plusieurs robinets maintenus notamment via les crénelures que définissent ces moyens de réception et fixation 10 de la console support 8.

Une telle console support 8 sera avantageusement conçue en tôle. Selon une caractéristique avantageuse, la console support 8 est montée au niveau de l'une des parois d'extrémité latérale 31, 32 de la cuve 2.

Par ailleurs, la cuve 2 reçoit à une paroi d'extrémité latérale 3, un capot de protection 11 de moyens d'alimentation en eau 12, de type tuyauterie et/ou autres, permettant d'acheminer de l'eau potable jusqu'au niveau du ou des robinets 9 sur la console support 8

Dans le mode de réalisation des figures 1 et 2, le capot de protection 11 est monté sur la paroi d'extrémité 31 de la cuve 2 équipée de cette console support 8.

Afin de permettre un jumelage avec une cuve 2 d'un abreuvoir 1 adjacent y compris au niveau d'une telle extrémité 31, le capot de protection 11 comprend des moyens de raccordement intermédiaires 13.

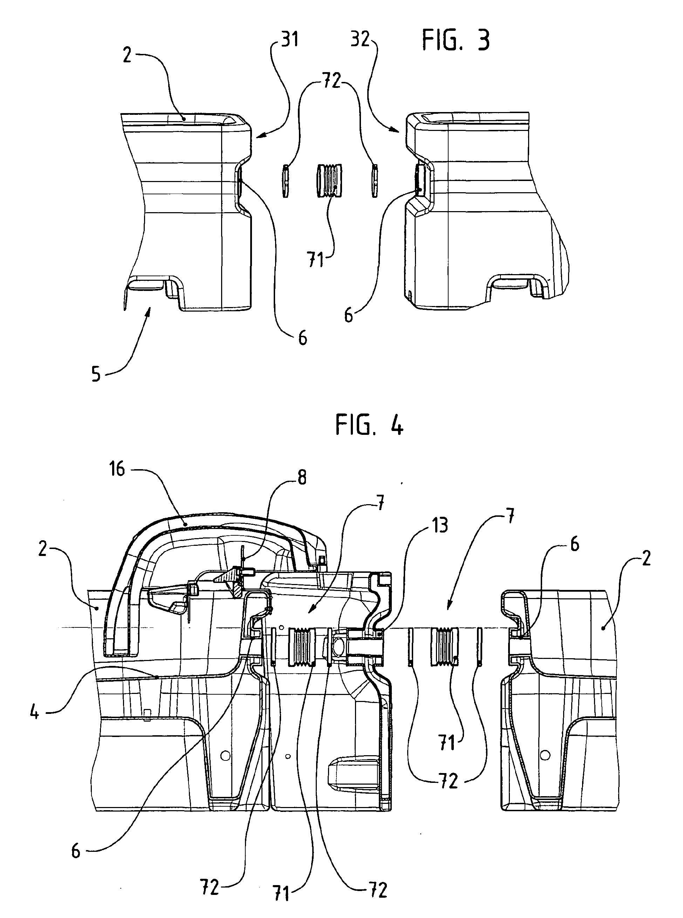

Tel qu'illustré sur les figures 2 et 4, ces moyens de raccordement intermédiaires 13 prennent la forme d'un conduit de raccordement 13 traversant ce capot de protection 11 pour coopérer, via des moyens de liaison 7, d'une part avec les moyens de raccordement 6 de la cuve 2 sur laquelle est monté ledit capot 11, en l'occurrence tel qu'illustré sur les figures 2 et 4 les moyens de raccordement 6 de la paroi d'extrémité 31 de la cuve 2, et d'autre part avec des moyens de raccordement 6 d'une cuve 2 d'un abreuvoir adjacent, comme visible dans la figure 4, voire des moyens de raccordement intermédiaires 13 d'un capot de protection 11 équipant un tel abreuvoir adjacent.

Selon une autre caractéristique de l'invention, le capot de protection 11 définit un logement par rapport à la cuve 2 sur laquelle il est monté, ledit logement réceptionnant, non seulement, les moyens d'alimentation en eau 12 des robinets 9, mais encore, de manière avantageuse, un dispositif de chauffage 14 de type thermoplongeur ou autre, assurant un maintien hors gel des robinetteries.

On voit ainsi que l'abreuvoir 1 selon l'invention permet au final l'agencement, par modularité, de plusieurs d'entre eux de façon alignée, leurs cuves 2 étant raccordées directement les unes avec les autres par le biais des moyens de raccordement 6 et de liaison 7, voire au travers de capots de protection 11 pouvant équiper lesdites cuves 2, grâce à des moyens de liaison intermédiaires 13. Dans ce cas, le raccordement peut tout aussi bien être effectué entre un capot de protection 11 d'un premier abreuvoir 1 et une cuve 2 d'un abreuvoir adjacent, ou entre deux capots de protection 11 de deux abreuvoirs mis côte à côte.

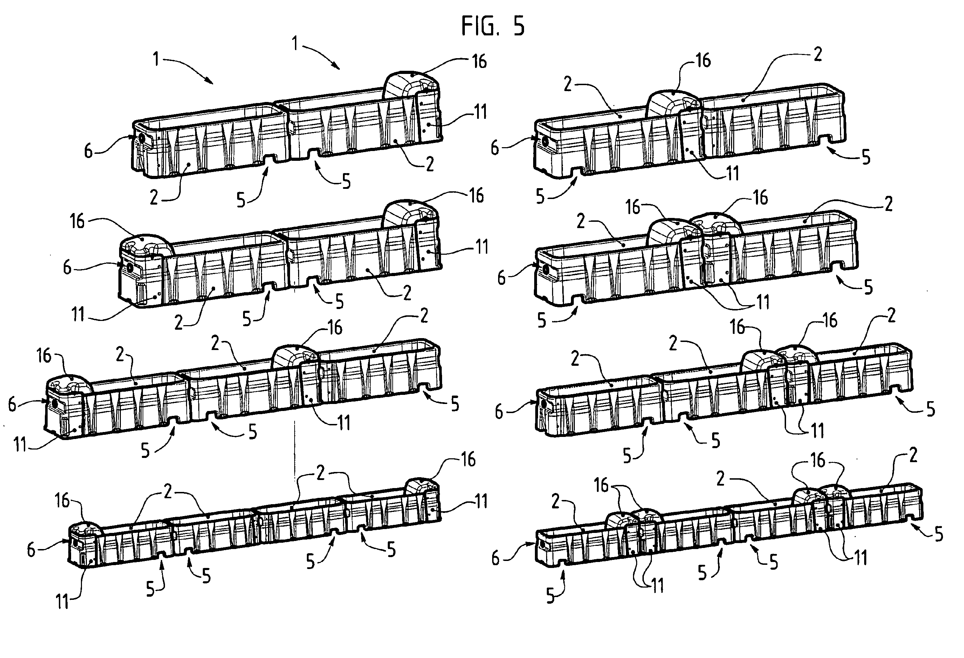

A ce propos, la figure 5 reprend, de manière non exhaustive, un certain nombre de configurations d'assemblages modulaires pouvant être obtenus à partir de plusieurs abreuvoirs 1 selon l'invention.

L'on voit également qu'il est opportun que le système de raccordement entre cuves 2 directement ou par un ou deux capots de protection 11 permette de pallier aux problèmes d'alignement desdits cuves ou bacs 2.

Pour ce faire, et tel que visible sur les figures 3 et 4, les moyens de liaison 7 sont préférentiellement de type souple et comportent avantageusement un embout de raccordement flexible 71 de type à soufflets. Celui-ci est conçu apte à être engagé et fixé, à ses extrémités, par deux colliers 72 auxdits moyens de raccordement 6 sous de brides de chacune des cuves adjacentes 2. Ces colliers 72 peuvent être du type à serrage, à sertissage ou à clipser sur les brides 6.

La figure 4 représente le système de raccordement mis en oeuvre dans le cas du raccordement entre de deux abreuvoirs au travers d'un capot de protection 11 équipant l'un d'eux. Les moyens de liaison 7 sont là encore des embouts flexibles encadrant le conduit des moyens de raccordement intermédiaires 13. Il va de soi que, selon un mode de réalisation non représenté, deux abreuvoirs 1 équipés chacun d'un tel capot de protections 11 pourront être associés de manière similaire au travers de ces derniers.

Selon un mode de réalisation représenté en figure 2, l'abreuvoir 1 selon l'invention peut encore être équipé de moyens de chauffage 15 montés dans la cuve 2 ou sous le fond 4 de cette dernière, par exemple des résistances électriques 15, voire un serpentin de fluide calorifique 15 raccordé à un dispositif de chauffage adapté. De cette manière, le maintien hors gel en hiver est assuré.

Par ailleurs, la console support 8 et les robinets 9 sont avantageusement protégés par un capot 16 de robinetterie.

Le capot de robinetterie 16 et le capot de protection 11 sont avantageusement conçu amovibles, afin de pouvoir, dans le premier cas régler et intervenir sur les robinets 9, et dans le deuxième cas, intervenir sur le raccordement en eau de l'abreuvoir 1.

Selon une autre caractéristique de l'invention, les robinets 9 peuvent être de type grand débit et/ou débit standard et/ou basse pression. Dans ce dernier cas, l'eau peut par exemple provenir du circuit de refroidissement d'un tank à lait. Elle permet de donner de l'eau tempérée aux animaux et/ou de maintenir l'abreuvoir 1 hors gel en hiver.

L'invention permet ainsi de proposer une solution d'abreuvement adaptable aux variations de taille d'un troupeau, notamment dans le cas de son d'accroissement, tout en préservant l'accessibilité à l'abreuvement pour l'ensemble du troupeau et en minimisant le nombre de points d'alimentation en eau nécessaires.

Notamment, le système selon l'invention est modulaire à l'infini.

En outre, la solution ainsi obtenue est de montage rapide.

De plus, le débit en eau est parfaitement contrôlable de part la possibilité préservée de multiplier les points d'arrivée d'eau, et la possibilité de choisir la quantité et le type de robinets à utiliser.

## Revendications

1. Abreuvoir (1) du type comportant une cuve (2) ayant deux parois d'extrémité latérales opposées (31, 32), **caractérisé par le fait que** lesdites parois d'extrémité latérale comportent chacune des moyens de raccordement (6) conçus aptes à coopérer, via des moyens de liaison (7), avec des moyens de raccordement (6) d'une paroi d'extrémité latérale (31,32) de la cuve (2) d'un abreuvoir (1) adjacent et de manière à mettre en communication deux cuves (2) ainsi raccordées pour permettre à l'eau alimentée dans l'une d'elle de se déverser dans l'autre.

2. Abreuvoir (1) selon la revendication 1, **caractérisé par le fait que** lesdits moyens de liaison (7) comportent un embout de raccordement flexible (71) de type à soufflets.

3. Abreuvoir selon la revendication 1, **caractérisé par le fait que** la cuve (2) comporte au moins une console support (8) réceptionnant au moins un robinet (9) d'alimentation en eau.

4. Abreuvoir (1) selon la revendication 3, **caractérisé en ce que** la console support (8) est montée au niveau d'une paroi (31, 32) d'extrémité latérale de la cuve.

5. Abreuvoir (1) selon l'une des revendications 3 ou 4, **caractérisé par le fait que** la console support (8) comporte des moyens de réception et fixation (10) de plus d'un robinet (9) d'alimentation en eau.

6. Abreuvoir (1) selon l'une des revendications 3 à 5, **caractérisé par le fait que** la cuve (2) est conçue apte à recevoir à au moins une paroi (31, 32) d'extrémité latérale un capot de protection (11) de moyens d'alimentation en eau (12) du ou des robinets (9).

7. Abreuvoir (1) selon la revendication 6, **caractérisé par le fait que** le capot de protection (11) est monté sur la paroi (31, 32) d'extrémité latérale de la cuve (2) équipée d'une console support (8).

8. Abreuvoir (1) selon l'une des revendications 6 ou 7, **caractérisé par le fait que** le capot de protection (11) comprend des moyens de raccordements intermédiaires (13) conçus aptes à coopérer, via des moyens de liaison (7), d'une part, avec des moyens de raccordement (6) de la cuve (2) sur laquelle est monté ledit capot (11), et d'autre part avec des moyens de raccordement (6) d'une cuve (2) d'un abreuvoir (1) adjacent ou des moyens de raccordement intermédiaires (13) d'un capot de protection (11) équipant cet abreuvoir (1) adjacent.

9. Abreuvoir (1) selon l'une des revendications 6 à 8, **caractérisé par le fait que** le capot de protection (11) définit un logement par rapport à la cuve (2), pour la réception d'un dispositif de chauffage de type thermoplongeur (14) ou autre.

10. Abreuvoir (1) selon l'une des revendications 1 à 9, **caractérisé par le fait qu'**il comporte des moyens de chauffage (15), notamment montés dans ou sous le fond (4) de la cuve (2), par exemple des résistances électriques ou un serpentin de fluide calorifique raccordé à un dispositif de chauffage adapté.

## Claims

1. Drinking trough (1) of the type including a trough (2) having two opposite side end walls (31, 32), wherein said side end walls each have connecting means (6) designed capable of cooperating, through linking means (7), with connecting means (6) of a side end wall (31, 32) of the trough (2) of an adjacent drinking trough (1) and of putting into communication two so connected troughs (2) in order to permit water supplied into one of them to flow into the other one.

2. Drinking trough (1) according to claim 1, wherein said linking means (7) include a flexible connecting mouthpiece (71) of the type with bellows.

3. Drinking trough according to claim 1, wherein the trough (2) includes at least one supporting bracket (8) receiving at least one water-supply tap (9).

4. Drinking trough (1) according to claim 3, wherein the supporting bracket (8) is mounted at the level of a side end wall (31, 32) of the trough.

5. Drinking trough (1) according to one of claims 3 or 4, wherein the supporting bracket (8) includes means for receiving and fixing (10) more than one water-supply tap (9).

6. Drinking trough (1) according to one of claims 3 to 5, wherein the trough (2) is designed capable of receiving at least at one side end wall (31, 32) a hood (11) for protecting the water-supply means (12) of the tap or taps (9).

7. Drinking trough (1) according to claim 6, wherein the protecting hood (11) is mounted on the side end wall (31, 32) of the trough (2) provided with a supporting bracket (8).

8. Drinking trough (1) according to one of claims 6 or 7, wherein the protecting hood (11) includes intermediate connecting means (13) designed capable of cooperating, through linking means (7), on the one hand, with connecting means (6) of the trough (2) on which said hood (11) is mounted and, on the other hand, with connecting means (6) of a trough (2) of an adjacent drinking trough (1) or with intermediate connecting means (13) of a protecting hood (11) this adjacent drinking trough (1) is provided with.

9. Drinking trough (1) according to one of claims 6 to 8, wherein the protecting hood (11) defines a recess with respect to the trough (2) for receiving a heating device of the type immersion heater (14) or the like.

10. Drinking trough (1) according to one of claims 1 to 9, wherein it includes heating means (15), namely mounted in or under the bottom (4) of the trough (2), for instance electrical resistors or a heat-carrying fluid coil connected to an adapted heating device.

## Patentansprüche

1. Tränke (1) der Art umfassend eine Wanne (2), die zwei gegenüberliegende seitliche Begrenzungswände (31, 32) aufweist, **dadurch gekennzeichnet, dass** die besagten seitlichen Begrenzungswände jeweils Verbindungsmittel (6) umfassen, die geeignet vorgesehen sind, um mit Hilfe von Verbindungsmittel (7) mit Verbindungsmitteln (6) einer seitlichen Begrenzungswand (31, 32) der Wanne (2) einer benachbarten Tränke (1) zusammenzuwirken und zwei solcherart verbundene Wannen (2) auf solche Art und Weise miteinander in Verbindung zu setzen, um dem Wasser, das dem einen von ihnen zugeführt wurde, zu erlauben, in den anderen abfließen zu lassen.

2. Tränke (1) nach Anspruch 1, **dadurch gekennzeichnet, dass** die besagten Verbindungsmittel (7) ein flexibles Verbindungsendstück (71) der Art Faltenbalg umfassen.

3. Tränke nach Anspruch 1, **dadurch gekennzeichnet, dass** die Wanne (2) zumindest eine Trägerkonsole (8) umfasst, die zumindest einen Hahn (9) zur Versorgung mit Wasser aufnimmt.

4. Tränke (1) nach Anspruch 3, **dadurch gekennzeichnet, dass** die Trägerkonsole (8) im Bereich einer seitlichen Begrenzungswand (31, 32) der Wanne montiert ist.

5. Tränke (1) nach einem der Ansprüche 3 oder 4, **dadurch gekennzeichnet, dass** die Trägerkonsole (8) Mittel zur Aufnahme und Befestigung (10) von mehr als einem Hahn (9) zur Versorgung mit Wasser umfasst.

6. Tränke (1) nach einem der Ansprüche 3 bis 5, **dadurch gekennzeichnet, dass** die Wanne (2) geeignet vorgesehen ist, um auf zumindest eine seitliche Begrenzungswand (31, 32) eine Haube (11) zum Schützen der Mittel zur Versorgung mit Wasser (12) des Hahns oder der Hähne (9) aufzunehmen.

7. Tränke (1) nach Anspruch 6, **dadurch gekennzeichnet, dass** die Schutzhaube (11) auf der seitlichen Begrenzungswand (31, 32) der Wanne (2) montiert ist, die mit einer Trägerkonsole (8) ausgestattet ist.

8. Tränke (1) nach einem der Ansprüche 6 oder 7, **dadurch gekennzeichnet, dass** die Schutzhaube (11) Zwischenverbindungsmittel (13) umfasst, die geeignet vorgesehen sind, um mit Hilfe der Verbindungsmittel (7), einerseits, mit Verbindungsmitteln (6) der Wanne (2), auf welcher die besagte Haube (11) montiert ist, und, andererseits, mit Verbindungsmitteln (6) einer Wanne (2) einer benachbarten Tränke (1) oder mit Zwischenverbindungsmitteln (13) einer Schutzhaube (11), die diese benachbarte Tränke (1) ausstattet, zusammenzuwirken.

9. Tränke (1) nach einem der Ansprüche 6 bis 8, **dadurch gekennzeichnet, dass** die Schutzhaube (11) eine Ausnehmung hinsichtlich der Wanne (2) für die Aufnahme einer Heizvorrichtung der Art Tauchsieder (14) oder dergleichen bildet.

10. Tränke (1) nach einem der Ansprüche 1 bis 9, **dadurch gekennzeichnet, dass** sie Heizmittel (15) umfasst, die insbesondere in oder unter dem Boden (4) der Wanne (2) montiert sind, zum Beispiel elektrische Widerstände oder eine Rohrschlange mit Wärmemedium, die mit einer angepassten Heizvorrichtung verbunden ist.
